# EUROPEAN PATENT APPLICATION

(11) **EP 4 509 752 A1**
(43) Date of publication of application: **19.02.2025**
(21) Application number: 24184491.9
(22) Date of filing: 25.06.2024
(51) Int. Cl.: F16M 13/02, F16B 47/00, F16M 11/04, F16M 11/06, B60R 11/04, B60R 11/02, B60R 11/00, F16M 11/28, F16M 11/38

(54) **VEHICLE CAMERA BRACKET DEVICE**

(30) Priority: 17.08.2023 CN 202322226815 U
(71) Applicant: Tilta Technology Co. Ltd, Shenzhen (CN); Shenzhen Arashi Vision Company Limited, Shenzhen (CN)
(72) Inventor: FENG, Zhichao, Nanshan District, Shenzhen (CN); ZENG, Wemping, Nanshan District, Shenzhen (CN); ZHOU, Kefeng, Nanshan District, Shenzhen (CN)
(74) Representative: Purdylucey Intellectual Property

(57) **Abstract**

The apparatus incorporates a fixed component (1), a carrying component (5), a supporting component (3), a first suction component (4), and a second suction component (6). The carrying component is pivotally and movably positioned at one end on the fixed component, featuring an installation part (11) at the other end for mounting external photographic equipment (101). The lower side of the fixed component is furnished with the first suction component. The supporting component is inclined and rotatably situated on the carrying component at one end, with the other end hosting the second suction component. In the present disclosure, the supporting effect is more stable, and the process of adjusting the camera's height and angle is more convenient.

## Description

### Field

The present disclosure belongs to the field of suction cups, in particular to a vehicle camera bracket device with suction cups.

### Background

When there is a need to capture videos from a vehicle, it is common to utilize a suction cup to mount a camera on the vehicle. Presently, most devices on the market feature a mount for action cameras or a mount for a selfie stick with an action camera interface on top of the suction cup. However, during vehicle movement under the influence of road conditions, especially on bumpy roads or in crosswind conditions, the stability of the camera bracket device and/or camera may be compromised, leading to interruptions or premature termination of video recording.

### Summary

To address these issues, aspects of the present disclosure provide a vehicle camera bracket device that offers stable support during use, as set out in the appended claims.

To achieve the above purpose, the technical solution of the present disclosure is as follows:
A vehicle camera bracket device, comprising:
a fixed component, equipped with an installation position for mounting photographic equipment, further comprising a first suction component;
a supporting component, with one end set up to support the photographic equipment and the other end hosting a second suction component.

In this vehicle camera bracket device, the photographic equipment is mounted on the fixed component, supported by the supporting component, and mounted through the first suction component and the second suction component, allowing the photographic equipment to be stably supported on a vehicle or other carrying objects.

Furthermore, the first suction component comprises a plurality of components, and two of the first suction components are rotatably set at two ends of the fixed component.

Furthermore, the device further includes an interface component; the interface component is located between the two first suction components, with one end installed at the installation position of the fixed component and the other end used to connect the photographic equipment, thereby fixing the photographic equipment to the installation position of the fixed component.

Furthermore, the first suction component comprises a first locking part, a first clamping part, a first suction cup, and a first fixed clamp. The first fixed clamp is connected at one end with the fixed component, and the other end is movably connected to the first clamping part, which clamps the first suction cup; the first locking part is movably set on the first clamping part. When the first locking part rotates relative to the first clamping part, it loosens or locks the first suction cup.

Furthermore, the second suction component comprises a second suction cup, a second locking part, and a second clamping part. One end of the second clamping part is movably connected to the supporting component, and the other end clamps the second suction cup. The second locking part is movably set on the second clamping part, and when the second locking part rotates relative to the second clamping part, it loosens or locks the second suction cup.

Furthermore, both the first suction cup and the second suction cup include a suction cup integrated module and a connector. One side of the connector is connected to the suction cup integrated module, and the other side is equipped with a slider. Both the first clamping part and the second clamping part have clamping grooves, and the slider is movably set in the clamping grooves.

Furthermore, the interface component comprises a second fixed clamp and a locking clamp. The second fixed clamp is clamped to the fixed component and has a clamping groove on the side for carrying the photographic equipment. The locking clamp is fixed to the groove wall of the clamping groove to clamp the photographic equipment.

Furthermore, the locking clamp comprises a first clamping block and a second clamping block. One end of the first clamping block is fixed to one end of the second clamping block. The other end of the first clamping block is detachably connected to the other end of the second clamping block, forming a motion gap. Both the first clamping block and the second clamping block are connected to the groove wall, and the detachable connection between the first clamping block and the second clamping block forms a clamping gap with the groove wall.

Furthermore, the interface component includes a clamping locking piece. The clamping locking piece successively moves through the other end of the first clamping block and the other end of the second clamping block to adjust the size of the movable gap.

Furthermore, the supporting component comprises a telescopic rod and a supporting part. The supporting position is set on the telescopic rod, and the supporting part is movably connected to the supporting position of the telescopic rod. One end of the telescopic rod, away from the supporting part, is movably connected to the second suction component, and the supporting part is used to support the photographic equipment.

The benefit of the present disclosure lies in that in this vehicle camera bracket device, the photographic equipment is mounted on the fixed component, supported by the supporting component, and mounted through the first suction component and the second suction component, allowing the photographic equipment to be stably supported on a vehicle or other carrying objects.

### Brief Description of the Drawings

FIG .1 is a schematic diagram of a vehicle camera bracket device installed with a photographic equipment.
FIG. 2 is a schematic diagram of a vehicle camera bracket device according to some aspects of the present disclosure.
FIG. 3 is a schematic diagram of a fixed component, an interface component, and a first suction component of the vehicle camera bracket device according to some aspects of the present disclosure.
FIG. 4 is a schematic diagram of the first suction component according to some aspects of the present disclosure.

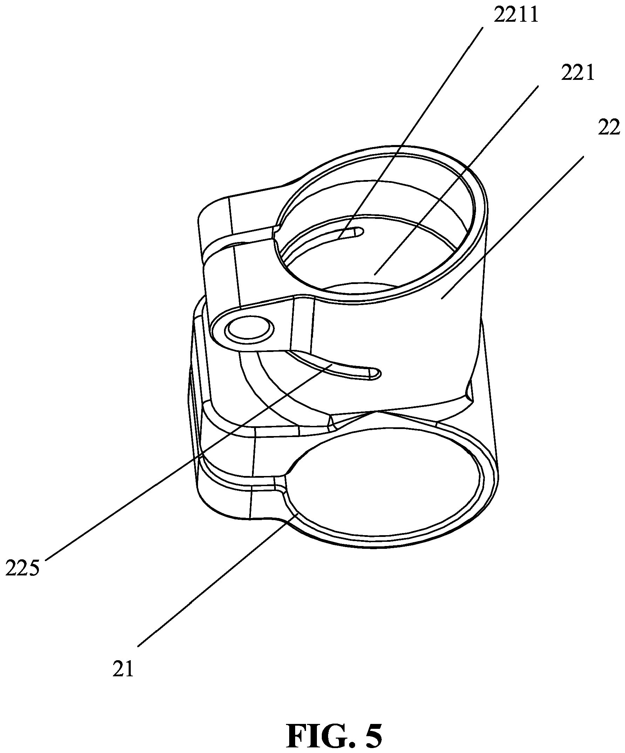

FIG. 5 is a schematic diagram of the interface component according to some aspects of the present disclosure.

### Numbering Explanation:

101 - Photographic equipment ;
1 - Fixed component;
11 - Installation position;
2 - Interface component;
21 - Second fixed clamp;
22 - Locking clamp;
221 - Clamping groove;
2211 - Groove wall;
222 - First clamping block;
223 - Second clamping block;
224 - Motion gap;
225 - Clamping gap;
23 - Clamping locking piece;
3 - Supporting component;
31 - Supporting position;
32 - Supporting part;
33 - Telescopic rod;
4 - First suction component;
41 - First suction cup;
411 - Suction cup integrated module;
412 - Connector;
413 - Slider;
42 - Locking part;
43 - First clamping part;
431 - Clamping groove;
44 - Limiting device;
45 - First fixed clamp;
5 - External carrying component;
6 - Second suction component;
61 - Second suction cup;
62 - Second locking part;
63 - Second clamping part.

### Detailed Description of the Drawings

To elucidate the purpose, technical solution, and aspects of the present disclosure, a detailed description is presented in conjunction with the accompanying drawings and embodiments. It is important to note that the specific embodiments outlined herein are intended solely for explanatory purposes and do not serve to limit the scope of the present disclosure.

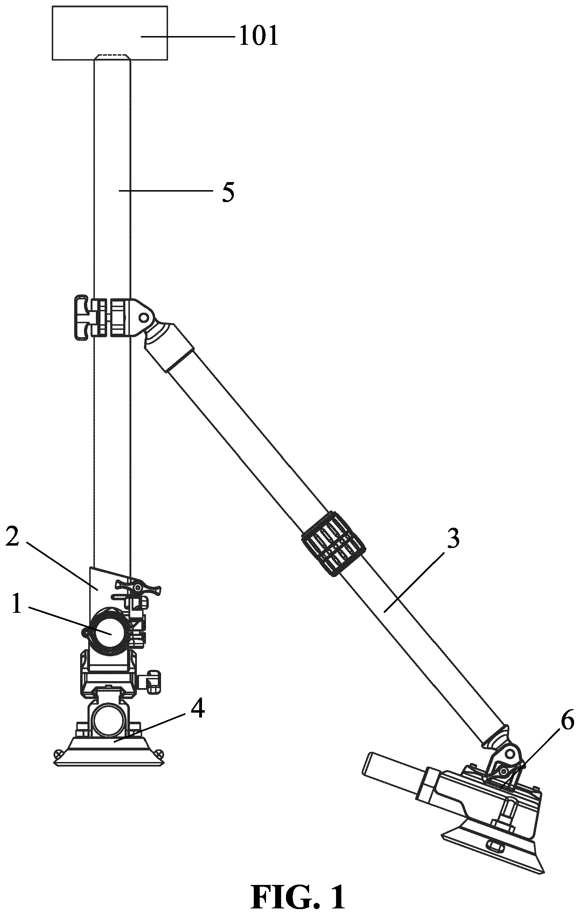

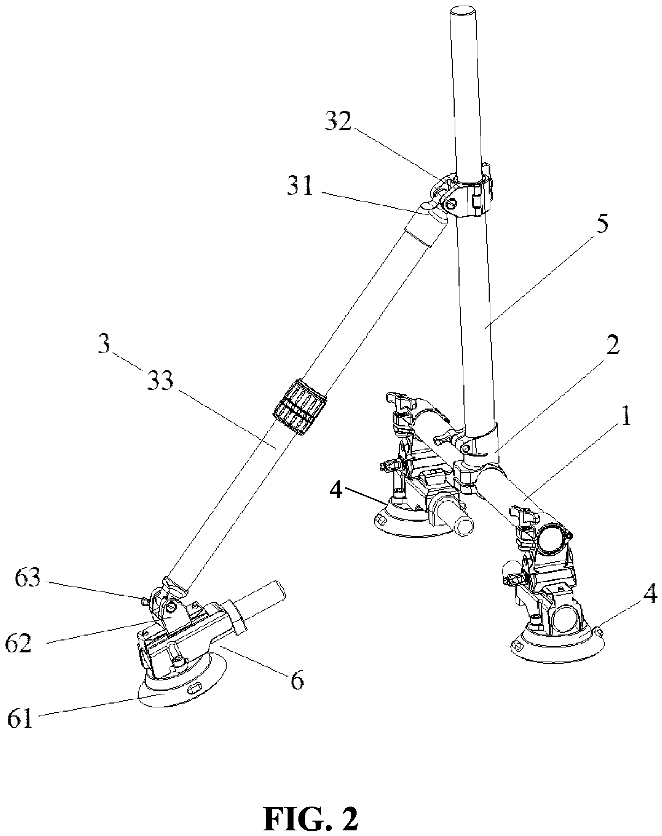

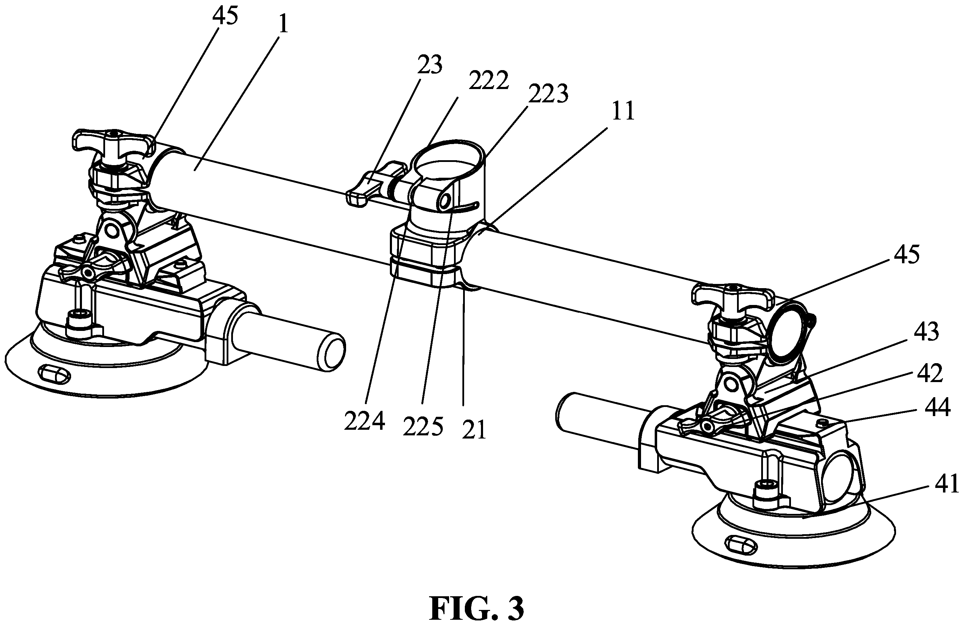

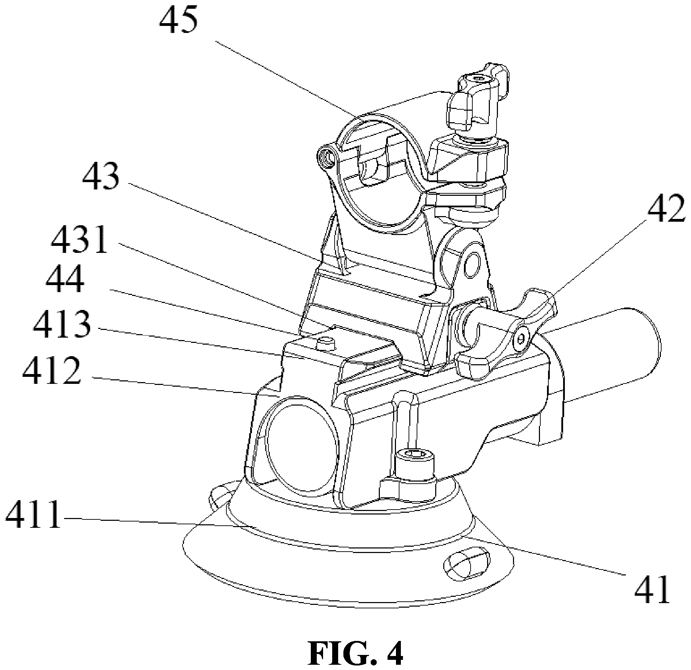

Referring to FIGs. 1-4, a vehicle camera bracket device, as depicted in this embodiment, comprises a fixed component 1 and a supporting component 3. The fixed component 1 is outfitted with a first suction component (e.g., two suction components 4), designed for secure attachment to the vehicle. With a designated installation position 11, the fixed component 1 facilitates the mounting of photographic equipment 101. On one end (a first end), the supporting component 3 is equipped with a supporting position 31, linking to an external carrying component 5. The opposing end (a second end) of the supporting component 3, distanced from the external carrying component 5, is flexibly (e.g., movably and/or pivotably) connected to a second suction component 6, providing support for the photographic equipment 101 affixed to the external carrying component 5.

During usage, the external carrying component 5, accommodating the photographic equipment 101, can be affixed to the installation position 11 of the fixed component 1. The first suction component 4 ensures the stable attachment of the fixed component 1 to the vehicle, enabling secure mounting of the photographic equipment 101. Additionally, the selective (e.g., adjustable) positioning of the second suction component 6 enhances adherence. The supporting component 3 is then inclined and linked to the external carrying component 5, delivering support and stability to the photographic equipment 101. This setup guarantees the steadfast installation of photographic equipment 101, minimizing the likelihood of camera shake, and rendering it suitable for diverse vehicular recording scenarios, including crosswind conditions and uneven road surfaces. In some aspects, the aforementioned external carrying component 5 can be a rod designed for action cameras.

In this embodiment, one end (a first end) of the interface component 2 establishes a connection with the installation position 11 of the fixed component 1, while the opposite end (a second end) is designated for the installation of the external carrying component 5, which serves the purpose of carrying the photographic equipment 101, thereby ensuring its secure fixation to the installation position 11 of the fixed component 1.

In some examples, there are multiple first suction components 4. In this embodiment, two first suction components 4 are detachably affixed to the respective ends of the fixed component 1, with the interface component 2 interposed between the two first suction components. Both first suction components 4 situated at the respective ends of the fixed component 1 can be rotatable (in one or more directions) for angle adjustment. This design enables the vehicle camera bracket device to adhere firmly to the vehicle surface through the second suction component 6 and the two first suction components 4, forming a stable triangular configuration to further enhance bracket stability for installation.

The first suction component 4 includes a first locking part 42, a first clamping part 43, a first suction cup 41, and a first fixed clamp 45. One end of the first fixed clamp 45 is connected with the end of the fixed component 1, and its other end is flexibly connected to the first clamping part 43. Rotation of the first fixed clamp 45 relative to the first clamping part 43 facilitates the adjustment of the angle of the first suction cup 41. The first clamping part 43 can securely grasp the first suction cup 41, and the first locking part 42, positioned movably on the first clamping part 43, either releases or secures the first suction cup 41 based on its rotational movement relative to the first clamping part 43.

Similarly, the second suction component 6 includes a second suction cup 61, a second locking part 63, and a second clamping part 62. The movable connection of one end (a first end) of the second clamping part 62 to the supporting component 3 allows for the adjustment of the angle of the second suction cup 61, which is clamped by the other end (a second end) by rotating the second clamping part 62 relative to the supporting component 3. The second locking part 63, movably situated on the second clamping part 62, serves to release or secure the second suction cup 61 based on rotational adjustments relative to the second clamping part 62. The interconnection dynamics among the second suction cup 61, the second locking part 63, and the second clamping part 62 mirror those of the first locking part 42, the first clamping part 43, and the first suction cup 41.

Regarding this application, in the event of a need to replace the first suction cup 41 or the second suction cup 61 within the first suction component 4 or the second suction component 6, respectively, loosening the first locking part 42 or the second locking part 63 facilitates the swift removal of the suction cups for replacement. In summary, the disassembly process for the first suction cup 41 or the second suction cup 61 is characterized by its simplicity, convenience, and expediency.

Both the first suction cup 41 and the second suction cup 61 incorporate a suction cup integrated module 411 and a connector 412. One end (a first end) of the connector 412 is linked to the suction cup integrated module 411, while the opposite side (a second end) features a slider 413. The first clamping part 43 and the second clamping part 62 are each equipped with clamping grooves 431, within which the slider 413 can move (e.g., sliding). The locking part 42 exhibits movable characteristics relative to the clamping part 43, securing the connector 412 within the clamping grooves 431.

In some aspects, the vehicle camera bracket device can integrate multiple limiting components 44, for example, with two such components elastically (or retractably) attached to both ends of the slider 413. These limiting components 44 extend from the surface of the slider 413, serving to restrict the movement of the clamping part 43. This preventive measure ensures that the clamping part 43 remains secured to the slider 413, preventing unintended detachment when the locking part 42 is not engaged. The limiting components 44 adopt an elastic (or retractable) design, allowing compression into the slider 413 upon application of external force and subsequently springing back into a limiting position in the absence of force (e.g., force applied on the limiting component 44 forcing it into a retracted position).

In some aspects, the interface component 2 features a second fixed clamp 21 and a locking clamp 22. The second fixed clamp 21 securely fastens to the installation position 11 of the fixed component 1, demonstrating adaptability to various fixed component 1 models. Incorporating a clamping groove 221 on its side surface, the second fixed clamp 21 provides support for the end of the external carrying component 5. The locking clamp 22 is affixed to the groove wall 2211 of the clamping groove 221, facilitating the secure clamping of photographic equipment 101.

The locking clamp 22 comprises a first clamping block 222 and a second clamping block 223, fixed or hinged at one end each. The opposite ends of the first clamping block 222 and the second clamping block 223 are detachably connected, creating a motion gap 224. Both the first clamping block 222 and the second clamping block 223 are affixed to the groove wall 2211, establishing a clamping gap 225 between the detachable connection location of these two clamping blocks and the groove wall 2211.

This design provides the locking clamp 22 with a degree of deformation, ensuring a secure grip on the external carrying component 5 and thereby maintaining the stability of the vehicle camera bracket device during shooting.

In some aspects, the interface component 2 can be equipped with a clamping locking device 23. The clamping locking device 23 sequentially passes through the opposite ends of the first clamping block 222 and the second clamping block 223, adjusting the size of the motion gap 224 by twisting (or rotating) the clamping locking device 23. This mechanism facilitates adaptation to external carrying components 5 of varying thicknesses by securing the carrying component within the clamping groove 221 using the first clamping block 222 and the second clamping block 223.

In one example, the clamping locking device 23 adopts a conventional hand-twist structure.

Furthermore, for ease of direction adjustment during shooting or modification of the suction position of the second suction component 6, both ends of the supporting component 3 can be flexibly (e.g., pivotably, rotatably) connected to the external carrying component 5 and the second suction component 6, respectively.

In some aspects, the supporting component 3 takes the form of rod (e.g., a telescopic rod). For instance, when it is necessary to maintain the position of the external carrying component 5 unchanged but alter the position of the second suction component 6, the rod can be extended or retracted. For example, the rod can be then rotated relative to the fixed clamp of the camera, enabling the second suction component 6 to reattach to the appropriate position.

In some aspects, the supporting component 3 comprises a telescopic rod 33 and a supporting part 32, with the supporting position 31 situated on the telescopic rod 33. The supporting part 32 is flexibly (e.g., rotatably, pivotably, etc.) connected to the supporting position 31 of the telescopic rod 33. The end of the telescopic rod 33, distanced from the supporting part 32, can be movably (e.g., rotatably, pivotably, etc.) connected to the second suction component 6. The supporting part 32 can serve the purpose of supporting the photographic equipment 101 (not shown) on the external carrying component 5.

Specifically, when the objective is to maintain the position of the external carrying component 5 unaltered while adjusting the position of the second suction component 6, the telescopic rod 33 can be extended or retracted. The rod is then rotated relative to the supporting part 32, enabling the second suction component 6 to reattach to the appropriate position.

The foregoing represents only an exemplary embodiment of the present disclosure and is not intended to restrict its scope. Any modifications, equivalent replacements, and enhancements made within the spirit and principles of the present disclosure should be encompassed within the protective scope of the present disclosure.

## Claims

1. A vehicle camera bracket device, comprising:
a fixed component, equipped with an installation position for mounting photographic equipment, and comprising a first suction component; and
a supporting component, with a first end, incorporation with the fixed component, set up to support the photographic equipment, and a second end hosting a second suction component.

2. A vehicle camera bracket device according to claim 1, wherein the first suction component comprises two first suction components that are rotatably set at respective ends of the fixed component.

3. A vehicle camera bracket device according to any preceding claim, wherein the first suction component comprises a first locking part, a first clamping part, a first suction cup, and a first fixed clamp;
a first end of the first fixed clamp is connected with the fixed component, and a second end of the first fixed clamp is movably connected to the first clamping part, which clamps the first suction cup;
the first locking part is movably set on the first clamping part; and
the first locking part is configured to relax or lock the first suction cup by rotating relative to the first clamping part.

4. A vehicle camera bracket device according to any preceding claim, wherein the second suction component comprises a second suction cup, a second locking part, and a second clamping part;
a first end of the second clamping part is movably connected to the supporting component, and a second end of the second clamping part clamps to the second suction cup;
the second locking part is movably set on the second clamping part; and the second locking part is configured to relax or lock the second suction cup by rotating relative to the second clamping part.

5. A vehicle camera bracket device according to claim 4 when dependent on claim 3, wherein each of the first suction cup and the second suction cup comprises a suction cup integrated module and a connector;
a first side of the connector is connected to the suction cup integrated module, and a second side of the connector is equipped with a slider; and
each of the first clamping part and the second clamping part comprises a clamping groove, and the slider is movably set in the clamping groove.

6. A vehicle camera bracket device according to claim 2 or according to claims 3-5 when dependent on claim 2, further comprising an interface component,
wherein the interface component is located between the two first suction components, a first end of the interface component installed at the installation position of the fixed component and a second end of the interface component adapted to connect the photographic equipment to fix the photographic equipment to the installation position of the fixed component.

7. A vehicle camera bracket device according to claim 6, wherein the interface component comprises a second fixed clamp and a locking clamp;
the second fixed clamp is clamped to the fixed component and comprises a clamping groove on a side for carrying the photographic equipment; and
the locking clamp is fixed to a groove wall of the clamping groove to clamp the photographic equipment.

8. A vehicle camera bracket device according to claim 7, wherein the locking clamp comprises a first clamping block and a second clamping block;
a first end of the first clamping block is fixed to a first end of the second clamping block;
a second end of the first clamping block is detachably connected to a second end of the second clamping block, forming a motion gap; and
the first clamping block and the second clamping block are both connected to the groove wall, and the detachable connection between the first clamping block and the second clamping block forms a clamping gap with the groove wall.

9. A vehicle camera bracket device according to claim 8, wherein the interface component comprises a clamping locking piece;
the clamping locking piece successively moves through the second end of the first clamping block and the second end of the second clamping block, and is configured to adjust the size of the motion gap.

10. A vehicle camera bracket device according to any preceding claim, the supporting component comprises a telescopic rod and a supporting part, a supporting position is set on the telescopic rod, and the supporting part is movably connected to the supporting position of the telescopic rod, an end of the telescopic rod, away from the supporting part, is movably connected to the second suction component, and the supporting part is used to support the photographic equipment.
